# EUROPEAN PATENT APPLICATION

(11) **EP 1 594 300 A1**
(43) Date of publication of application: **09.11.2005**
(21) Application number: 05076049.5
(22) Date of filing: 04.05.2005
(51) Int. Cl.: H04M 15/00, H04M 3/42, H04M 3/54, H04Q 3/00

(54) **A method of charging a subscriber of a telecommunications network**

(30) Priority: 06.05.2004 GB 0410083
(71) Applicant: SIEMENS AKTIENGESELLSCHAFT, 80333 München (DE)
(72) Inventor: Stylianopoulos, Georgios, 15234 Athen-Chalandri (GR)
(74) Representative: Morgan, Marc

(57) **Abstract**

There is described a system for operating a call charging service in a telecommunications network. In the system, a data signal is received from a user requesting that the cost of a call from a user terminal in the network be charged to a network subscriber account associated with a different user terminal. If it is determined that it is acceptable for the call charging service to be implemented the cost of the call is charged to that subscriber account.

## Description

This invention relates to a method of charging a subscriber in a telecommunications network.

It is common for a person to make a telephone call from a telephone that does not belong to them. This may happen for example when visiting a relative's or friend's house. Naturally, in such circumstances, the cost of the telephone call is charged to the account of the telephone's owner rather than to the telephone account of the person making the telephone call.

One approach for avoiding having the cost of a telephone call charged to the account of the telephone's owner is to make use of prepaid services that are available in telecommunications networks which have Intelligent network (IN) functions. The person making the telephone call uses the telephone's keypad to input a prefix and a PIN number before entering the telephone number of the telephone to be called. The network connects the call as normal but at the end of the call the cost is charged to an account associated with the PIN number rather than to the account of the calling phone's owner. This approach has several disadvantages in that it requires the use of a Service Control Point (SCP) exchange which is expensive, it requires the user to input a lot of digits (for a normal call more than 20 digits must be dialled) and the eventual charge is placed against a special account identified by the IN/PIN numbers rather than a telephone account of the user making the call.

A second approach for avoiding having the cost of a telephone call charged to the account of the telephone's owner is described in WO 01/39484. This approach makes uses of a voice recognition unit (VRU) and allows uses to charge call costs to an account. It requires sophisticated hardware in the VRU and again the account charged is not the call maker's telephone account.

Embodiments of the present invention aim to alleviate the above mentioned problems.

According to one aspect of the present invention there is provided a method for operating a call charging service in a telecommunications network, the method comprising: receiving a data signal at a first network entity that serves a first user terminal, the data signal requesting that the cost of a call from the first user terminal be charged to a network subscriber account associated with a different user terminal; routing the data signal through the network on the basis of the telephone number to a network entity that serves the different terminal; determining at the network entity that serves the different terminal if it is acceptable for the call charging service to be implemented; if it is acceptable for the call charging service to be implemented, causing the network entity serving the first user terminal to place the call from the first user terminal; and charging the cost of the call to the subscriber account.

According to the invention there is also provided an apparatus for implementing a call charging service in a telecommunications network, the method comprising: means for receiving a data signal at a first network entity that serves a first user terminal, the data signal requesting that the cost of a call from the first user terminal be charged to a network subscriber account associated with a different user terminal; means for routing the data signal through the network on the basis of the telephone number to a network entity that serves the different terminal; means for determining at the network entity that serves the different terminal if it is acceptable for the call charging service to be implemented; means for if it is acceptable for the call charging service to be implemented, causing the network entity serving the first user terminal to place the call from the first user terminal; and means for charging the cost of the call to the subscriber account.

The above and further features of the invention are set forth with particularity in the appended claims and together with advantages thereof will become clearer from consideration of the following detailed description of an exemplary embodiment of the invention given with reference to the accompanying drawings.

### In the drawings:

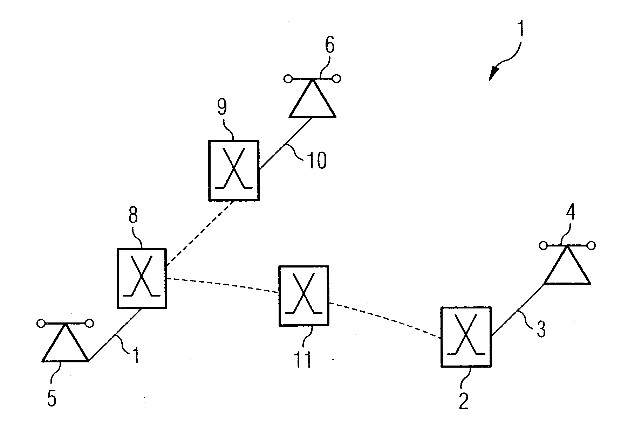

Figure 1 illustrates a network embodying the invention.

Figure 1 schematically illustrates a telephone network 1 comprising a first network exchange 2 that is connected via subscriber line 3 to a first telephone device 4. A telephone number is assigned to the line 3 and calls made to that telephone number are connected to the first telephone device 4 by the first network exchange 2. Calls made from the first telephone device 4 are routed through the network 1 to their destination from the first network exchange 1 and the costs of these calls are charged by a network operator to a telephone account of the subscriber who owns the first telephone device 4.

In this embodiment of the invention, the subscriber who owns the first telephone device 4 subscribes to a network service that enables the subscriber to cause the charges for his or her telephone calls made from telephones other than the first telephone 4 to be charged to the same telephone account as the charges for calls made from the first telephone device 4. For convenience this service will be referred to as herein as 'charging portability'.

In this embodiment the subscriber activates the service by using the keypad of the first telephone 4 to transmit a suitable Subscriber Control Input (SCI) command e.g.*35# to the first network exchange 2. In response to receiving this command, the network exchange activates the 'charging portability' service for that subscriber. Typically, the subscriber may choose to activate the service prior to leaving the premises in which the first telephone 4 is located. This gives the subscriber the option of causing the charges for any telephone calls made by the subscriber when away from the premises to be charged to the telephone account of the first telephone 4. For example, a telephone call made later by the subscriber from a friend's telephone device 5 to a further telephone device 6.

In this example, the friend's telephone device 5 is connected via line 7 to a second exchange 8 and the further telephone device 6 is connected to a third exchange 9 via line 10.

To place a call from the friend's telephone 5 to the further telephone 6 and use the 'charging portability' service to charge the cost of the call to the telephone account of the first telephone 4, the subscriber inputs to the keypad of the friend's telephone device 5 a signal requesting the implementation of the service, and then, the telephone number of the phone to be called. The signal requesting the implementation of the service comprises an appropriate SCI command, a pre - assigned PIN for authentication purposes and the telephone number of the account to be charged.

Thus in this example, the signal may be *36*1245*801234560*, where *36 is the 'Charging Portability' SCI code, 1245 the PIN number, 801234560 the telephone number of the first telephone 4.

The second exchange 8 parses the signal, and identifies from the 'Charging Portability' SCI code that the 'Charging Portability' service is to be used. The signal is routed through the network 1 to the exchange that serves the telephone that has the telephone number identified in the signal, in this example, the first exchange 2. The routing is performed in an analogous manner to normal call routing. Thus, a co-ordination processor (not shown) in the second exchange 8 splits the telephone number into sub - parts (CPTs) and establishes from a data base search that a fourth exchange 11 handles calls to numbers having the city area code '801'. The exchange 11 is informed and takes over the routing of the signal. The fourth exchange 11 establish from its own database search that the first exchange 2 handles calls for numbers having the local area code '23'. The first exchange 2 is informed and establishes from its database that the number '4560' is for calls to the first telephone 4 connected to the subscriber line 3.

The first exchange 2 checks that the subscriber subscribes to the 'Charging Portability' service, that the service is active and that the PIN number is authentic. If these requirements are met, a message is sent back through the network to the second exchange 8 informing it that the transfer of the charging of a call to the telephone account associated with the line 3 is accepted.

After receipt of this message, the second exchange 8 in the normal manner routes the call between the friend's phone 5 and the further telephone device 6 via the third exchange 9.

Billing information for this call is generated at the second exchange 8 and either during the call or after the call is terminated, the billing information is sent from the second exchange 8 to the first exchange 2. The first exchange 2 charges the cost of the call to the subscriber's telephone account for the subscriber line 3.

In the above described example, the subscriber pre - activates the 'Charging Portability' service prior to leaving home, by sending an appropriate SCI code from the first telephone 4 (i.e. the telephone associated with the telephone account that calls are to be charged to) to the first network exchange 2. The service implemented by sending a different SCI code from the friend's telephone 5. Alternatively, the service may be simply be activated and implemented from the telephone that the call is to be made from, by the use of a single SCI code. Thus, for example, the subscriber may activate the service from the friend's telephone 5 by sending to the second exchange 8 a message comprising an SCI activation code for the feature, a PIN number and the telephone number of the account to be charged (e.g. *35*3435*234560, where *35 is the SCI code, 3435 the PIN and 234560 the telephone number of the first telephone 4. This message is routed from the second exchange 8 through the network 1 to the first exchange 2. The first exchange 2 checks that the subscriber subscribes to the 'Charging Portability' service and the PIN number is authentic. If these requirements are met, a message is sent back through the network to the second exchange 8 informing it that the charging of calls made from the friends telephone 5 may be transferred to the telephone account associated with the line 3. Subsequently, until the 'Charging Portability' service is deactivated, billing information for each call made from the friend's telephone 5 is sent from the second exchange 8 to the first exchange 2 for the call charges to be made to the telephone account for the line 3. Thus, the subscriber may make a series of calls from the friend's telephone 5 and have the charge for each of them made to the telephone account of the line 3 without having to enter for each call the SCI code, the PIN and the telephone number of the line 3.

To deactivate the 'Charging Portability' service, the subscriber may send from the friend's telephone 5 to the second exchange 8 a message comprising an SCI 'Charging Portability' deactivation code, the PIN number and the telephone number of the subscriber line 3. This message is transmitted from the second exchange 8 to the first exchange 2 and the 'Charging Portability' service is deactivated. Alternatively, the 'Charging portability' service may be automatically deactivated by means of a supervision timer which is started after a call made from the friend's telephone 5, and which causes the service to be de-activated if after a pre-determined time period no further call is made from the friend's telephone 5.

In an alternative embodiment, the 'Charging Portability' service again may be activated by the subscriber the from the friend's phone 5 by transmitting to the second exchange 2 an SCI activation code, the PIN, the telephone number of account to be charged and the telephone number of the telephone to be called. The SCI activation code, the PIN, the telephone number of account to be charged are again routed to the first exchange 2 which checks that the subscriber subscribes to the 'Charging Portability' service and the PIN number is authentic. If these requirements are met, a message is sent back through the network to the second exchange 8 informing it that the charging of a call made from the friends telephone 5 may be transferred to the telephone account associated with the line 3. After the call is made the 'Charging Portability' service is automatically disabled so that any further calls made form the friend's phone 5 without the service being reactivated are charge to the normal account associated with that phone.

It will be appreciated that the invention may find application in many types of telephone systems including but not limited to, traditional fixed line telephone systems, mobile telephone systems and combinations thereof. The invention may find application in systems based on Time Division Multiplexing (TDM) and Internet Protocol (IP) based systems, for example, Voice over the Internet (VoIP) systems.

There are many scenarios in which embodiments of the invention may be useful. For example, if a subscriber needs to make a call from a callbox but has no money or phone feature card, the subscriber may implement the 'Charging Portability' feature from the box and cause the charge of call to be made against his or her home telephone account. Similarly, if a subscriber needs to make a call from a mobile phone but has no credit, the subscriber may implement the 'Charging Portability' feature from the mobile phone and cause the charge of the call to be made against his or her home telephone account.

Having thus described the present invention by reference to a preferred embodiment it is to be well understood that the embodiment in question is exemplary only and that modifications and variations such as will occur to those possessed of appropriate skills may be made without departure from the scope of the invention as set forth in the appended claims.

## Claims

1. A method for operating a call charging service in a telecommunications network, the method comprising:
receiving a data signal at a first network entity that serves a first user terminal, the data signal requesting that the cost of a call from the first user terminal be charged to a network subscriber account associated with a different user terminal;
routing the data signal through the network on the basis of the telephone number to a network entity that serves the different terminal;
determining at the network entity that serves the different terminal if it is acceptable for the call charging service to be implemented;
if it is acceptable for the call charging service to be implemented, causing the network entity serving the first user terminal to place the call from the first user terminal; and
charging the cost of the call to the subscriber account.

2. A method according to claim 1, the method further comprising:
generating billing data for the call;
routing the billing data to the network entity for use in charging the cost of the call to the subscriber account.

3. A method according to any preceding claim, wherein the data signal includes a pre-determined user control code for requesting the use of the service.

4. A method according to claim 3, wherein the user control code is a subscriber control input command.

5. A method according to any preceding claim, wherein the signal includes a PIN number for use in verifying that the service may be used.

6. A method according to any preceding claim, wherein the signal is received from the user terminal that makes the call.

7. A method according to any preceding claim, wherein if it is determined that it is acceptable for the call charging service to be implemented, the cost of any call made from the user terminal from which the signal is received is charged to the charge account, until the service is de-activated.

8. A method according to claim 1 wherein the service remains active until de-activated in response to receiving a de-activation signal received from the same terminal as was the request signal.

9. A method according to claim 1 wherein the service is automatically de-activated after a pre-determined time interval passes.

10. An apparatus for implementing a call charging service in a telecommunications network, the method comprising:
means for receiving a data signal at a first network entity that serves a first user terminal, the data signal requesting that the cost of a call from the first user terminal be charged to a network subscriber account associated with a different user terminal;
means for routing the data signal through the network on the basis of the telephone number to a network entity that serves the different terminal;
means for determining at the network entity that serves the different terminal if it is acceptable for the call charging service to be implemented;
means for if it is acceptable for the call charging service to be implemented, causing the network entity serving the first user terminal to place the call from the first user terminal; and
means for charging the cost of the call to the subscriber account.

11. An apparatus according to claim 102, the apparatus further comprising:
means for generating billing data for the call;
means for routing the billing data to the network entity for use in charging the cost of the call to the subscriber account.

12. An apparatus according to any of claims 10 to 11, wherein the data signal includes a pre-determined user control code for requesting the use of the service.

13. An apparatus according to claim 12, wherein the user control code is a subscriber control input command.

14. An apparatus according to any of claims 10 to 11, wherein the signal includes a PIN number for use in verifying that the service may be used.

15. An apparatus according to any of claims 10 to 11, wherein the signal is received from the user terminal that makes the call.
